# EUROPÄISCHE PATENTSCHRIFT

(11) **EP 2 408 077 B1**
(45) Veröffentlichungstag und Bekanntmachung des Hinweises auf die Patenterteilung: **25.12.2013**
(21) Anmeldenummer: 11172824.2
(22) Anmeldetag: 06.07.2011
(51) Int. Cl.: H02G 3/04

(54) **Elektroinstallationskanal**
Electrical installation channel
Canal d'installation électrique

(30) Priorität: 15.07.2010 DE 102010032023
(43) Veröffentlichungstag der Anmeldung: 18.01.2012
(73) Patentinhaber: OBO Bettermann GmbH & Co. KG, 58710 Menden (DE)
(72) Erfinder: Raschke, Jörg, 51674 Wiehl (DE); Warkus, Kai, 51709 Marienheide (DE)
(74) Vertreter: Patentanwälte Ruff, Wilhelm, Beier, Dauster & Partner

(56) Entgegenhaltungen:
- EP-A1- 0 469 457
- EP-A1- 0 518 404
- DE-A1- 19 737 893
- DE-U1- 8 704 502
- DE-U1- 29 909 364

## Beschreibung

Die Erfindung betrifft einen Elektroinstallationskanal mit einem metallischen Kanalunterteil und einem metallischen Kanalabdeckteil, wobei das Kanalunterteil mit einer in Längsrichtung durchgehenden Öffnung zum Einlegen von Kabeln und mit zwei in Längsrichtung durchgehenden Rinnen versehen ist, die zu beiden Seiten der Öffnung angeordnet sind, wobei die jeweils innenliegenden Seitenwände der Riemen die Öffnung begrenzen und wobei am Kanalabdeckteil eine Rastklammer mit wenigstens einer Kontaktschneide zur elektrischen Kontaktierung angeordnet ist.

Aus der europäischen Patentschrift EP 0 469 457 B1 ist ein Elektroinstallationswandkanal bekannt, der eine in Längsrichtung durchgehende Öffnung und diese Öffnung seitlich begrenzende Rinnen aufweist. In diese Rinnen kann ein Wandkanalabdeckteil eingesetzt werden. Zusätzlich kann an dem Wandkanalabdeckteil eine Rastklammer befestigt werden, die dann ebenfalls in die Rinnen eingreift und eine Innenseite der Schenkel der U-förmigen Rinne mit drei Rastschneiden kontaktiert. Auf diese Weise kann ein zuverlässiger elektrischer Kontakt zwischen dem Wandkanalunterteil und dem Wandkanalabdeckteil hergestellt werden. Um die Sicherheitsanforderungen zu erfüllen, ist das Wandkanalunterteil noch in konventioneller Weise mittels eines Kabels geerdet.

Aus der deutschen Gebrauchsmusterschrift DE 8 704 502 U1 ist ein als Wandkanal ausgebildeter Elektroinstallationskanal mit einem metallischen Kanalunterteil und einem metallischen Kanalabdeckteil bekannt, wobei das Kanalunterteil mit einer in Längsrichtung durchgehenden Öffnung zum Einlegen von Kabeln und mit zwei in Längsrichtung durchgehenden Rinnen versehen ist, die zu beiden Seiten der Öffnung angeordnet sind, wobei die jeweils innenliegenden Seitenwände der Rinne die Öffnung begrenzen und wobei am Kanalabdeckteil eine Rastklammer mit wenigstens einer Kontaktschneide zur elektrischen Kontaktierung angeordnet ist. Die Kontaktschneide ist am Kanalabdeckteil so angeordnet, dass sie nicht die innenliegenden Seitenwände der Rinnen kontaktiert, die die Öffnung begrenzen, sondern die in Bezug auf die Öffnung des Kanalunterteils außenliegenden Seitenwände, die gleichzeitig Seitenflächen der Rinnen bilden.

Aus der deutschen Gebrauchsmusterschrift DE 299 09 364 U1 ist ein Elektroinstallationskanal mit einem metallischen Kanalunterteil und einem metallischen Kanalabdeckteil bekannt, bei dem das Kanalabdeckteil mit nach innen vorragenden Lappen versehen ist, die an dem Kanalunterteil angreifen und dieses kontaktieren sollen. Das Kanalabdeckteil weist einen U-förmigen Querschnitt auf und soll das Kanalunterteil übergreifen. Die Lappen am Kanalabdeckteil greifen dann an den außenliegenden Seitenwänden des Kanalunterteils an.

Aus der europäischen Offenlegungsschrift EP 0 518 404 A1 ist ein Elektroinstallationskanal mit einem metallischen Kanalunterteil und einem metallischen Kanalabdeckteil bekannt. Das Kanalabdeckteil weist einen U-artigen Querschnitt auf und ist im Bereich seiner Schenkel mit Freischnitten und mit nach innen vorragenden Lappen versehen, die die Funktion von Rastklammern übernehmen sollen. Diese Lappen sind dafür vorgesehen, an Seitenflächen von Rinnen anzugreifen, die eine Öffnung des Kanalunterteils begrenzen. In Bezug auf die Öffnung greifen die Lappen damit an den außenliegenden Seitenwänden der Rinnen an.

Aus der deutschen Offenlegungsschrift DE 197 37 893 A1 ist ein Elektroinstallationskanal mit einem metallischen Kanalunterteil und einem metallischen Kanalabdeckteil bekannt. Am Kanalunterteil sind Rastklammern vorgesehen, die an den Seitenwänden eines im Querschnitt U-förmigen Kanalabdeckteils angreifen.

Mit der Erfindung soll ein Elektroinstallationskanal verbessert werden.

Erfindungsgemäß ist hierzu ein Elektroinstallationskanal mit einem metallischen Kanalunterteil und einem metallischen Kanalabdeckteil vorgesehen, wobei das Kanalunterteil mit einer in Längsrichtung durchgehenden Öffnung zum Einlegen von Kabeln und mit zwei in Längsrichtung durchgehenden Rinnen versehen ist, die zu beiden Seiten der Öffnung angeordnet sind, wobei die jeweils innenliegenden Seitenwände der Rinnen die Öffnung begrenzen, wobei am Kanalabdeckteil eine Rastklammer mit wenigstens einer Kontaktschneide zur elektrischen Kontaktierung angeordnet ist, bei dem die Kontaktschneide der Rastklammer im aufgesetzten Zustand des Kanalabdeckteils an wenigstens einer der innenliegenden Seitenwände der Rinnen des Kanalunterteils angreift, die die Öffnung begrenzen.

Indem eine Kontaktschneide der Rastklammer an einer der Öffnung zugewandten Seitenwand des Kanalunterteils angreift, steht gegenüber konventionellen Elektroinstallationswandkanälen wesentlich mehr Platz zur Verfügung, um die Rastklammer optimal anzuordnen. Die Rastklammer kann dadurch wesentlich leichter montiert werden und eine Federspannung sowie eine Form der Kontaktschneide können optimal auf eine möglichst zuverlässige Kontaktgabe eingerichtet werden. Speziell bei Elektroinstallationswandkanälen aus Aluminiumstrangpressprofilen wird dadurch die Herstellung erheblich erleichtert, da zwischen einzelnen Rastmitteln bzw. Vorsprüngen, um einerseits das Kanalabdeckteil am Kanalunterteil zu fixieren und andererseits die Rastklammer am Kanalabdeckteil zu befestigen, mehr Platz zur Verfügung steht als dies bei konventionellen Wandinstallationskanälen der Fall ist. Bei der Erfindung kann der bewährte Aufbau eines Kanalunterteils mit zwei in Längsrichtung durchgehenden Rinnen beibehalten werden, die seitlich der in Längsrichtung durchgehenden Öffnung angeordnet sind. Indem nun die Rastklammer die innen liegenden Seitenwände der Rinnen kontaktiert, also diejenigen Seitenwände der Rinnen, die die Öffnung seitlich begrenzen, steht für die optimale Anordnung der Rastklammern ausreichend Platz zur Verfügung. Speziell müssen die Rastklammern nicht mehr in den Rinnen selbst angeordnet werden, die dadurch optimal auf die Aufnahme der Schenkel des Kanalabdeckteils ausgelegt werden können.

In Weiterbildung der Erfindung weist das Kanalabdeckteil eine Grundplatte und wenigstens einen sich von einer Grundplatte weg erstreckenden Steg auf, an dem die Rastklammer befestigt ist.

Das Vorsehen eines Stegs zur Befestigung der Rastklammer erlaubt eine sichere Befestigung der Rastklammer und kann gleichzeitig auch eine zuverlässige elektrische Kontaktierung zwischen Rastklammer und Steg sicherstellen. Die Rastklammer kann einen solchen Steg beispielsweise umgreifen, sie kann aber auch in Hinterschnitte an dem Steg eingehängt werden.

In Weiterbildung der Erfindung ist das Kanalabdeckteil allgemein U-förmig ausgebildet und weist zwei die Grundplatte seitlich begrenzende und im Wesentlichen senkrecht von dieser abragende Schenkel auf, wobei von jedem der Schenkel aus nach innen versetzt jeweils ein von der Grundplatte abragender Steg zur Anordnung von Rastklammern vorgesehen ist.

Durch die allgemein U-förmige Ausbildung des Kanalabdeckteils kann dieses zuverlässig an dem Kanalunterteil fixiert werden, ohne dass breite Spalten zwischen Kanalunterteil und Kanalabdeckteil verbleiben. Das Vorsehen jeweils eines zusätzlichen, von der Grundplatte abragenden Stegs zur Anordnung von Rastklammern erleichtert die Befestigung der Rastklammern erheblich, da die zusätzlichen Stege optimal auf die Befestigung der Rastklammern und die Kontaktierung des Kanalunterteils durch die Kontaktschneiden der Rastklammern ausgelegt werden können. Im Unterschied zu konventionellen Elektroinstallationswandkanälen müssen dadurch die Rastklammern nicht noch zusätzlich irgendwie an dem Kanalabdeckteil oder Kanalunterteil angeordnet werden, sondern können optimal platziert und gesichert werden.

In Weiterbildung der Erfindung ist der Steg mit wenigstens einer in Längsrichtung durchgehenden hinterschnittenen Nut und einem von der Nut beabstandeten Rastvorsprung versehen, wobei die Rastklammer zwischen der Nut und dem Rastvorsprung angeordnet ist.

Mittels einer hinterschnittenen Nut und einem von der Nut beabstandeten Rastvorsprung lässt sich der Rastvorsprung in sehr zuverlässiger und dabei sehr einfacher Weise montieren und wird im montierten Zustand sicher am Kanalabdeckteil gehalten. Zum Befestigen der Rastklammer wird diese zunächst einseitig in die hinterschnittene Nut eingeschoben und dann am Rastvorsprung vorbei in ihre endgültige Montagelage gebracht. In ihrer Montagelage ist die Rastklammer dann mit einem Befestigungsabschnitt zwischen der hinterschnittenen Nut und dem Rastvorsprung eingespannt und hält dadurch sicher in ihrer vorgesehenen Lage.

In Weiterbildung der Erfindung ist vorgesehen, dass im aufgesetzten Zustand des Kanalabdeckteils sich die Schenkel des Kanalabdeckteils wenigstens abschnittsweise in die Rinnen des Kanalunterteils erstrecken und die Seitenwände der Rinnen jeweils zwischen einem Schenkel und einem Steg des Kanalabdeckteils angeordnet sind.

Auf diese Weise kann eine Fixierung des Kanalabdeckteils mittels seiner Schenkel und den Rinnen des Kanalunterteils erfolgen und die Rastklammer kann ausschließlich auf eine zuverlässige elektrische Kontaktierung ausgelegt werden, da sie nicht noch zusätzlich Haltefunktionen übernehmen muss. Beispielsweise können die Schenkel an ihrem freien Ende jeweils mit einem in Längsrichtung durchgehenden Rastvorsprung versehen werden, der im montierten Zustand des Kanalabdeckteils hinter einem passenden durchgehenden Vorsprung an einer Innenseite einer Seitenwand der Rinne angeordnet ist.

In Weiterbildung der Erfindung ist das Kanalabdeckteil als metallisches Strangpressprofil, insbesondere Aluminiumprofil, ausgebildet.

Die Ausbildung als Strangpressprofil und insbesondere Aluminiumprofil erlaubt eine einfache, hoch belastbare und dabei ästhetisch ansprechende Gestaltung. Eine Oberflächenschicht auf dem metallischen Strangpressprofil, beispielsweise eine Farbschicht oder eloxierte Schicht, werden dabei mit den Kontaktschneiden der Rastklammer zuverlässig durchdrungen, so dass eine elektrische Kontaktierung zwischen Kanalabdeckteil und Kanalunterteil sichergestellt ist.

Weitere Merkmale und Vorteile der Erfindung ergeben sich aus den Ansprüchen und der nachfolgenden Beschreibung bevorzugter Ausführungsformen der Erfindung im Zusammenhang mit den Zeichnungen. Einzelmerkmale der unterschiedlichen dargestellten Ausführungsformen können dabei in beliebiger Weise miteinander kombiniert werden, ohne den Rahmen der Erfindung zu überschreiten. In den Zeichnungen zeigen:
- Fig. 1: eine Vorderansicht eines Kanalabdeckteils für einen erfindungsgemäßen Elektroinstallationskanal mit teilweise montierten Rastklammern,
- Fig. 2: eine teilweise perspektivische Darstellung des Kanalabdeckteils der Fig. 1,
- Fig. 3: eine Vorderansicht eines erfindungsgemäßen Elektroinstallationskanals mit einem aufgesetzten, aber noch nicht endgültigen montierten Kanalabdeckteil,
- Fig. 4: den Elektroinstallationskanal der Fig. 3 in einem nachfolgenden Stadium der Montage des Kanalabdeckteils,
- Fig. 5: den Elektroinstallationskanal der Fig. 3 mit vollständig montiertem Kanalabdeckteil,
- Fig. 6: den Elektroinstallationskanal der Fig. 5 mit einem eingesetzten Installationsgerät,
- Fig. 7: eine Vorderansicht eines erfindungsgemäßen Elektroinstallationskanals gemäß einer weiteren Ausführungsform der Erfindung,
- Fig. 8: eine Vorderansicht eines erfindungsgemäßen Elektroinstallationskanals gemäß einer weiteren Ausführungsform der Erfindung und
- Fig. 9: eine perspektivische Ansicht des Elektroinstallationskanals der Fig. 8.

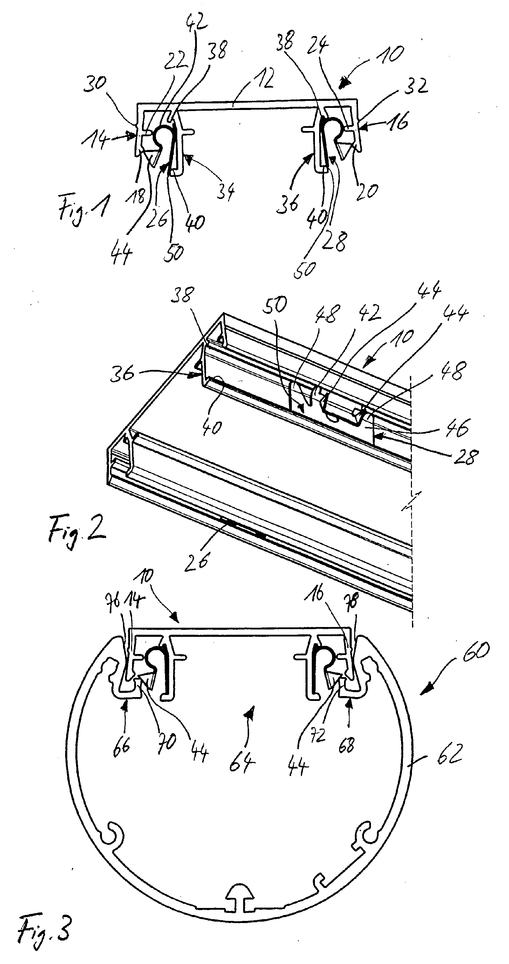

Die Darstellung der Fig. 1 zeigt ein Kanalabdeckteil 10 für einen erfindungsgemäßen Elektroinstallationskanal. Das Kanalabdeckteil 10 weist eine ebene Grundplatte 12 und zwei sich von den Seitenkanten der Grundplatte 12 weg erstreckende Schenkel 14, 16 auf. Die Schenkel erstrecken sich ausgehend von der Grundplatte 12 zunächst senkrecht, um dann in einem kleinen Winkel nach außen abzubiegen. Das Kanalabdeckteil 10 weist dadurch eine U-Form auf, wobei die Schenkel des Us leicht nach außen geöffnet sind. An ihren freien Enden weisen die Schenkel 14, 16 jeweils einen nach innen, zum jeweils anderen Schenkel 14, 16 hin gewandten durchgehenden Vorsprung 18, 20 auf. Die Vorsprünge 18, 20 sind dafür vorgesehen, hinter passende Rastvorsprünge an Rinnen eines Kanalunterteils eingerastet zu werden, um das Kanalabdeckteil 10 in Position am Kanalunterteil zu halten. Weiter sind die Schenkel 14, 16 etwa auf halber Höhe mit einem ebenfalls nach innen abragenden leistenartigen Vorsprung 22, 24 versehen. Die leistenartigen Vorsprünge 22, 24 versteifen die Schenkel 14, 16 und sorgen gleichzeitig für eine definierte Anlage eines Federbogens von Rastklammern 26, 28, die an dem Kanalabdeckteil 10 befestigt werden, wie nachfolgend noch erläutert wird.

An ihrer Außenseite sind die Schenkel 16 jeweils mit einem weiteren, in Längsrichtung durchgehenden Vorsprung 30, 32 versehen. Die Vorsprünge 30, 32 weisen jeweils einen etwa halbkreisförmigen Querschnitt auf und sind dafür vorgesehen, im Bereich einer passend ausgebildeten Kante am Kanalunterteil anzuliegen und dadurch einen Tiefenanschlag für eine Positionierung des Kanalabdeckteils am Kanalunterteil bereitzustellen.

Nach innen hin beabstandet von den Schenkeln 14, 16 ist jeweils ein Steg 34, 36 vorgesehen, wobei die Stege 34, 36 zur Befestigung der Rastklammern 26, 28 dienen. Zwischen dem Schenkel 14 und dem Steg 34 sowie zwischen dem Schenkel 16 und dem Steg 36 ist jeweils ein Zwischenraum gebildet, in dem jeweils eine Rastklammer 26, 28 angeordnet werden kann. Die Stege 34, 36 sind jeweils in ihrem, der Grundplatte 12 benachbarten Bereich mit einer hinterschnittenen Nut 38 versehen, in die ein Montagevorsprung der Rastklammern 26, 28 eingeschoben wird. Gegenüberliegend der hinterschnittenen Nut 38 ist jeweils ein Rastvorsprung 40 vorgesehen, der der hinterschnittenen Nut 38 zugewandt ist und dadurch ebenfalls einen leichten Hinterschnitt bildet. Der Rastvorsprung 40 ist an dem rechtwinklig abgewinkelten freien Ende der Stege 34, 36 angeordnet, wobei das jeweilige freie Ende in Richtung auf den jeweils benachbarten Schenkel 14, 16 abgewinkelt ist. Der Rastvorsprung 40 ist so bemessen, dass die Rastklammern 26, 28 über den Rastvorsprung 40 hinüber gedrückt werden können, um dann zwischen der hinterschnittenen Nut 38 und dem zwischen dem Rastvorsprung 40 und dem jeweiligen Steg 34, 36 liegenden Hinterschnitt sicher befestigt zu sein.

In der Darstellung der Fig. 1 ist die linke Rastklammer 26 noch nicht vollständig in die hinterschnittene Nut 38 des Stegs 34 eingeschoben. Die in der Fig. 1 rechte Rastklammer 28 liegt mit ihrem oberen Ende bereits vollständig in der hinterschnittenen Nut 38 des Stegs 36 und muss demzufolge nur noch mit ihrem gegenüberliegenden Ende über den Rastvorsprung 40 hinübergedrückt werden.

Die Rastklammern 26, 28 sind neben ihrem ebenen Befestigungsabschnitt, mit dem die Befestigung an den Stegen 34, 36 erfolgt, mit einem Federbogen 42 versehen, an dessen freiem Ende dann eine dreieckförmige Kontaktschneide 44 angeordnet ist. Die Kontaktschneide 44 ist mit ihrer Spitze im montierten Zustand der Rastklammern 26, 28 den Schenkeln 14, 16 des Kanalabdeckteils 10 zugewandt und in diese Richtung vorgespannt.

Die Darstellung der Fig. 2 zeigt das Kanalabdeckteil 10 der Fig. 1 in einer abschnittsweisen perspektivischen Ansicht. Die Rastklammer 28 weist den annähernd ebenen Befestigungsabschnitt 44 auf, der allgemein U-förmig ist und der sich mit zwei Enden 46 in die hinterschnittene Nut 38 des Steges 36 erstreckt. Zwischen den Enden 46 ist ausgehend vom Befestigungsabschnitt 44 der Federbogen 42 vorgesehen, an dessen Ende dann zwei parallel zueinander angeordnete und voneinander beabstandete Kontaktschneiden 44 angeordnet sind. Eine dem Ende 48 gegenüberliegende Kante 50 der Rastklammer 28, siehe auch Fig. 1, ist dann in den Hinterschnitt zwischen dem Rastvorsprung 40 und dem Steg 36 gerastet. In dieser in Fig. 2 dargestellten, eingerasteten Position hält die Rastklammer 28 durch eine Vorspannung des Befestigungsabschnitts 46, da eine Länge zwischen den Enden 48 und der Kante 50 geringfügig größer ist als ein Abstand zwischen dem Grund der hinterschnittenen Nut 38 und hinter dem Rastvorsprung 40 liegenden Nutgrund.

Die Darstellung der Fig. 3 zeigt einen erfindungsgemäßen Elektroinstallationskanal 60 mit einem Kanalunterteil 62 und dem auf das Kanalunterteil 62 aufgesetzten, aber noch nicht endgültig montierten Wandkanaloberteil 10. Das Kanalunterteil 62 ist als Hohlprofil ausgebildet und weist einen kreisabschnittsförmigen Querschnitt auf. Das Kanalunterteil 62 weist eine in Längsrichtung durchgehende Öffnung 64 auf, die von zwei Rinnen 66, 68 berandet wird. Die die Öffnung berandenden Seitenwände 70, 72 der Rinnen 66, 68 begrenzen dabei lediglich einen von einem Außenumfang des Kanalunterteils 62 nach innen zurückgesetzten Abschnitt der Öffnung. Nach außen hin wird die Öffnung von Seitenwänden 74, 76 der Rinnen 66, 68 begrenzt.

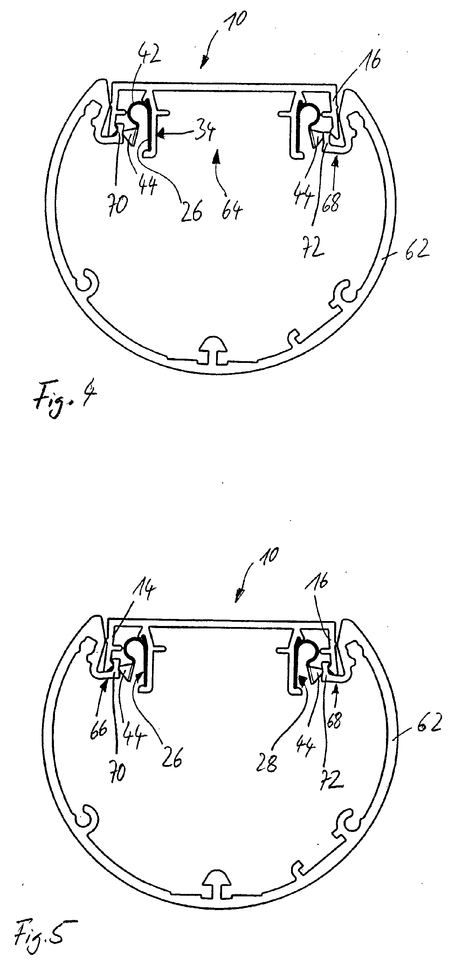

Zum Montieren des Kanalabdeckteils am Kanalunterteil wird dieses, so wie in Fig. 3 gezeigt ist, teilweise in die Öffnung 64 eingesetzt, so dass die Außenseiten der Schenkel 14, 16 an den Seitenwänden 76, 78 der Öffnung anliegen. In dieser Position liegen die Kontaktschneiden 44 auf dem freien Ende der innen liegenden Seitenwände 70, 72 der Rinnen 66, 68 auf, und zwar auf der innen liegenden Ecke der Seitenwände 70 bzw. 72. Wird nun ausgehend von der Position in Fig. 3 das Kanalabdeckteil 10 in Richtung auf das Kanalunterteil 62 gedrückt, so rutscht die Kontaktschneide 44 über die innen liegende Ecke der Seitenwand 70 hinaus und liegt dann auf der Innenseite der Seitenwand 70 an, wie in Fig. 4 dargestellt ist. Die Kontaktschneide 44 kratzt während dieser Gleitbewegung, ausgehend von der Position in Fig. 3 in die Position der Fig. 4, eine eventuelle Oberflächenbeschichtung oder Oberflächenoxidierung der Seitenwand 70 auf und sorgt dadurch für einen zuverlässigen elektrischen Kontakt zwischen dem Kanalunterteil 62 und der Kontaktschneide 44. Da andererseits die Rastklammer 26 mit ihren Enden 48 und der Kante 50 so an dem Kanalabdeckteil 10 befestigt ist, dass die spitz ausgebildeten Enden 48 ebenfalls eine eventuelle Oberflächenbeschichtung oder Oberflächenoxidierung in den hinterschnittenen Nuten 38 des Kanalabdeckteils 10 durchdringen, ist dadurch ein zuverlässiger elektrischer Kontakt zwischen dem Kanalabdeckteil 10 und dem Kanalunterteil 62 sichergestellt.

Wie in der Darstellung der Fig. 4 zu erkennen ist, kontaktieren die Kontaktspitzen 44 die Innenseite der Seitenwand 70, also die der Öffnung 64 zugewandte Seite der Wand 70. Die Rastklammer 26 kann dadurch optimal angeordnet werden, da in Bezug auf eine Anordnung des Steges 34 nur wenige Randbedingungen zu beachten sind und speziell kann der Steg 34 so weit entfernt von der Seitenwand 70 angeordnet werden, dass die Rastklammer 26 einen ausreichend großen Federbogen 42 aufweisen kann, um eine ausreichende Anpresskraft der Kontaktspitze 44 sicherzustellen.

Der in Fig. 4 rechte Schenkel 16 des Kanalabdeckteils 10 ist noch nicht vollständig in die Rinne 68 des Kanalunterteils 62 hineingeschoben worden, so dass in dieser Position die Kontaktschneide 44 noch an einer innen liegenden Ecke der Seitenwand 72 der Rinne 68 anliegt.

Ausgehend von der in Fig. 4 dargestellten Position gelangt das Kanalabdeckteil 10 dann in die in Fig. 5 dargestellte Endposition. In dieser

Endposition sind beide Schenkel 14, 16 des Kanalabdeckteils 10 vollständig in die Rinnen 66, 68 eingeschoben und liegen mit ihren freien Enden auf einem Grund der Nuten 66, 68 auf und sind dabei gleichzeitig an dem Kanalunterteil 62 verrastet. Die Kontaktschneiden 44 der Rastklammern 26, 28 kontaktieren dann jeweils die innen liegenden Seitenwände 70, 72 der Rinnen 66, 68.

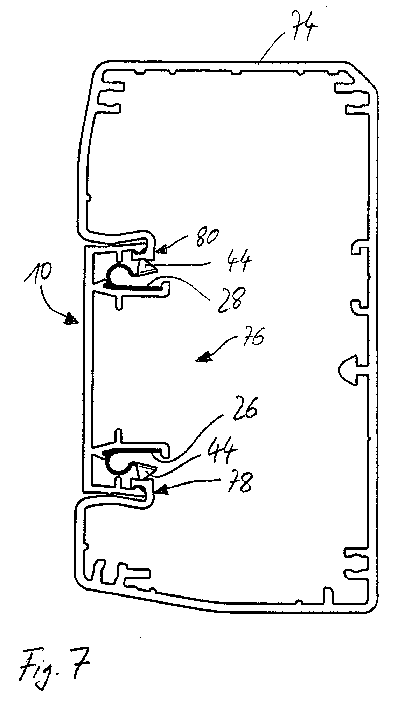

Die Darstellung der Fig. 7 zeigt eine weitere erfindungsgemäße Ausführungsform eines Elektroinstallationskanals. Das Kanalabdeckteil 10 der Fig. 1 ist dort in ein Kanalunterteil 74 eingesetzt, das einen allgemein rechteckigen Querschnitt hat. Im Bereich einer in Längsrichtung durchgehenden Öffnung 76 und speziell in Bezug auf die Öffnung 76 seitlich begrenzende Rinnen 78, 80 ist das Kanalunterteil 74 aber identisch zum Kanalunterteil 62 ausgebildet. Das Aufschieben das Kanalabdeckteils 10 und dessen Verrastung in den Rinnen 78, 80 und auch die elektrische Kontaktierung der innen liegenden Seitenwände der Rinnen 78, 80 mittels der Kontaktschneiden 44 der Rastklammern 26, 28 erfolgt daher gleich wie bei der anhand der Fig. 3 bis 5 beschriebenen Ausführungsform und wird daher nicht erneut erläutert.

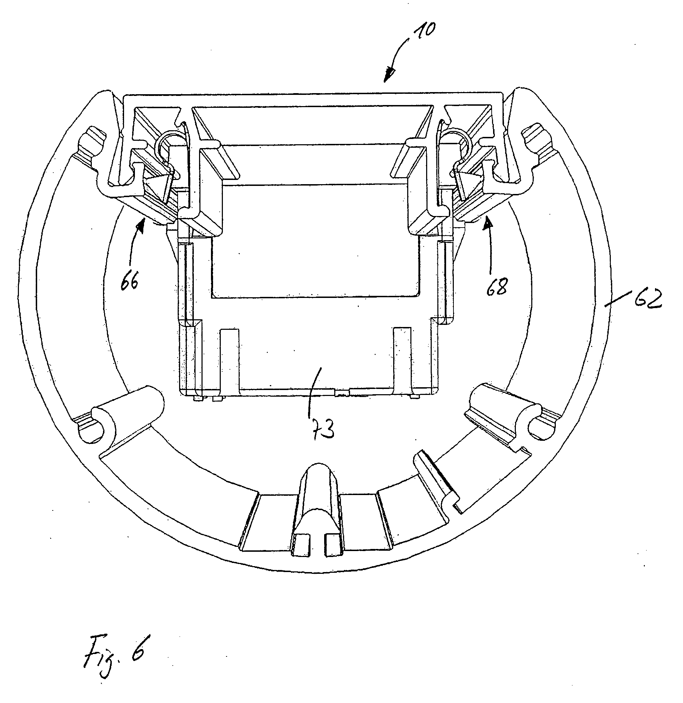

Die Darstellung der Fig. 6 zeigt den Elektroinstallationskanal der Fig. 5 in einer perspektivischen Ansicht, wobei zusätzlich ein Elektroinstallationsgerät 73 in das Kanalunterteil 62 eingesetzt ist. Das Installationsgerät 73 kann beispielsweise eine Schutzkontaktsteckdose sein und wird mit geeigneten Rastvorsprüngen bzw. hakenförmigen Vorsprüngen in die Rinnen 66, 68 des Kanalunterteils 62 eingehängt. Der Zwischenraum zwischen zwei benachbarten Installationsgeräten 73 wird dann mit einem entsprechend abgelängten Kanalabdeckteil 10 abgedeckt.

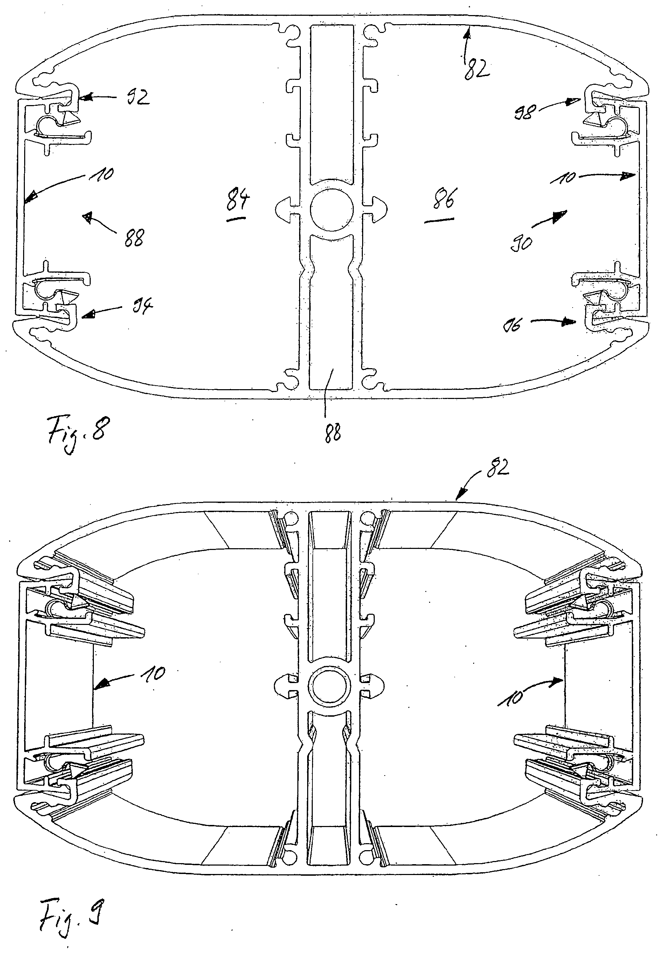

Die Darstellung der Fig. 8 zeigt eine weitere Ausführungsform eines erfindungsgemäßen Elektroinstallationskanals. Ein Kanalunterteil 82 weist dort die Form eines flach liegenden Hs auf und stellt dadurch zwei Kabelkanäle 84, 86 für die Unterbringung von Kabeln und Installationsgeräten zur Verfügung, die mittels einer Zwischenwand 88 voneinander getrennt sind. Die Zwischenwand 88 ist als Hohlkammerwand ausgebildet und weist eine zentrale Bohrung sowie sich an die Bohrung beidseitig anschließende, etwa rechteckförmige Kammern auf.

Die Kabelkanäle 84, 86 sind jeweils mit einer in Längsrichtung durchgehenden Öffnung 88, 90 versehen, die jeweils von Rinnen 92, 94, 96, 98 seitlich begrenzt sind. Im Bereich der Rinnen 92, 94, 96, 98 ist das Kanalunterteil 82 identisch zu dem Kanalunterteil 62 bzw. 74 der Fig. 6 bzw. 7 ausgebildet, so dass die Ausbildung dieser Rinnen 92, 94, 96, 98 nicht erneut beschrieben wird. Die in Längsrichtung durchgehenden Öffnungen 88, 90 sind jeweils mittels eines Kanalabdeckteils 10 verschlossen. Das Kanalabdeckteil 10 ist identisch zu dem anhand von Fig. 1 sowie weiterer Figuren beschriebenen Kanalabdeckteil 10 ausgebildet. Auf eine erneute Erörterung der Ausbildung des Kanalabdeckteils 10 sowie des Montagevorgangs der Kanalabdeckteile 10 an dem Kanalunterteil 82 wird daher verzichtet.

Die Darstellung der Fig. 9 zeigt eine perspektivische Ansicht des Elektroinstallationskanals der Fig. 8 mit dem Kanalunterteil 82 und zwei montierten Kanalabdeckteilen 10.

## Patentansprüche

1. Elektroinstallationskanal mit einem metallischen Kanalunterteil (62; 74,; 82) und einem metallischen Kanalabdeckteil (10), wobei das Kanalunterteil (62; 74; 82) mit einer in Längsrichtung durchgehenden Öffnung (64; 76; 88, 90) zum Einlegen von Kabeln und mit zwei in Längsrichtung durchgehenden Rinnen (66, 68; 78, 80; 92, 94, 96, 98) versehen ist, die zu beiden Seiten der Öffnung (64; 76; 88, 90) angeordnet sind, wobei die jeweils innenliegenden Seitenwände (70, 72) der Rinnen die Öffnung begrenzen, wobei am Kanalabdeckteil (10) eine Rastklammer (26, 28) mit wenigstens einer Kontaktschneide (44) zur elektrischen Kontaktierung angeordnet ist, **dadurch gekennzeichnet, dass** die Kontaktschneide (44) der Rastklammer (26, 28) im aufgesetzten Zustand des Kanalabdeckteils (10) an wenigstens einer der innenliegenden Seitenwände (70, 72) der Rinnen angreift, die die Öffnung begrenzen.

2. Elektroinstallationskanal nach Anspruch 1, **dadurch gekennzeichnet, dass** das Kanalabdeckteil (10) eine Grundplatte (12) und wenigstens einen sich von einer Grundplatte (12) wegerstreckenden Steg (34, 36) aufweist, an dem die Rastklammer (26, 28) befestigt ist.

3. Elektroinstallationskanal nach Anspruch 2, **dadurch gekennzeichnet, dass** das Kanalabdeckteil (10) allgemein u-förmig ausgebildet ist und zwei die Grundplatte (12) seitlich begrenzende und von dieser abragende Schenkel (14, 16) aufweist, wobei von jedem der Schenkel (14, 16) aus nach innen versetzt jeweils ein von der Grundplatte (12) abragender Steg (34, 36) zur Anordnung von Rastklammern (26, 28) vorgesehen ist.

4. Elektroinstallationskanal nach Anspruch 2 oder 3, **dadurch gekennzeichnet, dass** der Steg (34, 36) mit wenigstens einer in Längsrichtung durchgehenden hinterschnittenen Nut (38) und einem von der Nut (38) beabstandeten Rastvorsprung (40) versehen ist, wobei die Rastklammer (26, 28) zwischen der Nut (38) und dem Rastvorsprung (40) angeordnet ist.

5. Elektroinstallationskanal nach einem der Ansprüche 2 bis 4, **dadurch gekennzeichnet, dass** im aufgesetzten Zustand des Wandkanalabdeckabteils (10) sich die Schenkel (14, 16) des Kanalabdeckteils (10) wenigstens abschnittsweise in die Rinnen (66, 68; 78, 80; 92, 94, 96, 98) des Kanalunterteils (62; 74; 82) erstrecken und die Seitenwände (70, 72) der Rinnen jeweils zwischen einem Schenkel (14, 16) und einem Steg (34, 36) des Kanalabdeckteils (10) angeordnet sind.

6. Elektroinstallationskanal nach einem der vorstehenden Ansprüche, **dadurch gekennzeichnet, dass** das Kanalabdeckteil (10) als metallisches Strangpressprofil, insbesondere Aluminiumprofil, ausgebildet ist.

## Claims

1. An electrical installation channel having a metallic channel bottom part (62; 74; 82) and a metallic channel cover part (10), wherein the channel bottom part (62; 74; 82) is provided with a through opening (64; 76; 88, 90) extending in the longitudinal direction for inserting cables and two through troughs (66, 68; 78, 80; 92, 94, 96, 98) extending in the longitudinal direction which troughs are arranged on both sides of the opening (64; 76; 88, 90), wherein the respective interior side walls (70, 72) of the troughs delimit the opening, wherein on the channel cover part (10) a locking clamp (26, 28) with at least one contact blade (44) for electrical contacting is disposed, **characterized in that** the contact blade (44) of the locking clamp (26, 28) in the condition with the channel cover part (10) placed on engages at least on one of the interior side walls (70, 72) of the troughs that delimit the opening.

2. The electrical installation channel according to claim 1, **characterized in that** the channel cover part (10) has a base plate (12) and at least one bar (34, 36) extending away from the base plate (12), on which bar the locking clamp (26, 28) is fixed.

3. The electrical installation channel according to claim 2, **characterized in that** the channel cover part (10) has a generally u-shaped design and two legs (14, 16) delimiting the base plate (12) laterally and projecting from said base plate, wherein starting from each of the legs (14, 16) towards the interior offset is provided in each case one bar (34, 36) projecting away from the base plate (12) for arrangement of locking clamps (26, 28).

4. The electrical installation channel according to claim 2 or 3, **characterized in that** the bar (34, 36) is provided with at least one undercut groove (38) extending through in the longitudinal direction and a locking protrusion (40) spaced from the groove (38), wherein the locking clamp (26, 28) is interposed between the groove (38) and the locking protrusion (40).

5. The electrical installation channel according to any one of the claims 2 to 4, **characterized in that** in the condition with the channel cover part (10) placed on the legs (14, 16) of the channel cover part (10) at least in sections extend into the troughs (66, 68; 78, 80; 92, 94, 96, 98) of the channel bottom part (62; 74; 82) and the side walls (70, 72) of the troughs are in each case interposed between one leg (14, 16) and one bar (34, 36) of the channel cover part (10).

6. The electrical installation channel according to any one of the preceding claims, **characterized in that** the channel cover part (10) is formed in a metallic extruded profile, in particular an aluminum profile.

## Revendications

1. Canal d'installation électrique comprenant une partie inférieure de canal métallique (62 ; 74 ; 82) et une partie de recouvrement de canal métallique (10), la partie inférieure de canal (62 ; 74 ; 82) étant munie d'une ouverture traversante (64 ; 76 ; 88, 90) dans la direction longitudinale pour l'insertion de câbles et comprenant deux rigoles traversantes (66, 68 ; 78, 80 ; 92, 94, 96, 98) dans la direction longitudinale, lesquelles sont disposées des deux côtés de l'ouverture (64 ; 76 ; 88, 90), les parois latérales des rigoles situées respectivement à l'intérieur (70, 72) limitant l'ouverture, une pince d'encliquetage (26, 28) comprenant au moins une lame de contact (44) pour la mise en contact électrique étant disposée sur la partie de recouvrement de canal (10), **caractérisé en ce que** la lame de contact (44) de la pince d'encliquetage (26, 28) vient en prise dans l'état posé de la partie de recouvrement de canal (10) sur au moins l'une des parois latérales des rigoles situées à l'intérieur (70, 72) et qui limitent l'ouverture.

2. Canal d'installation électrique selon la revendication 1, **caractérisé en ce que** la partie de recouvrement de canal (10) présente une plaque de base (12) et au moins une nervure (34, 36) s'étendant à l'écart d'une plaque de base (12), sur laquelle nervure est fixée la pince d'encliquetage (26, 28).

3. Canal d'installation électrique selon la revendication 2, **caractérisé en ce que** la partie de recouvrement de canal (10) est réalisée généralement en forme de U et présente deux branches (14, 16) limitant latéralement la plaque de base (12) et faisant saillie depuis celle-ci, une nervure (34, 36) faisant saillie depuis la plaque de base (12) pour l'agencement de pinces d'encliquetage (26, 28) étant à chaque fois disposée de manière décalée vers l'intérieur depuis chacune des branches (14, 16).

4. Canal d'installation électrique selon la revendication 2 ou 3, **caractérisé en ce que** la nervure (34, 36) est munie d'au moins une rainure (38) en contre-dépouille et continue dans la direction longitudinale et d'une saillie d'encliquetage (40) espacée de la rainure (38), la pince d'encliquetage (26, 28) étant disposée entre la rainure (38) et la saillie d'encliquetage (40).

5. Canal d'installation électrique selon l'une quelconque des revendications 2 à 4, **caractérisé en ce que** dans l'état posé de la partie de recouvrement de canal de paroi (10), les branches (14, 16) de la partie de recouvrement de canal (10) s'étendent au moins en partie dans les rigoles (66, 68 ; 78, 80 ; 92, 94, 96, 98) de la partie inférieure de canal (62 ; 74 ; 82) et les parois latérales (70, 72) des rigoles sont à chaque fois disposées entre une branche (14, 16) et une nervure (34, 36) de la partie de recouvrement de canal (10).

6. Canal d'installation électrique selon l'une quelconque des revendications précédentes, **caractérisé en ce que** la partie de recouvrement de canal (10) est réalisée sous forme de profilé filé métallique, en particulier de profilé en aluminium.
